# EUROPÄISCHE PATENTSCHRIFT

(11) **EP 0 937 815 B1**
(45) Veröffentlichungstag und Bekanntmachung des Hinweises auf die Patenterteilung: **07.11.2001**
(21) Anmeldenummer: 98123128.5
(22) Anmeldetag: 04.12.1998
(51) Int. Cl.: D21H 23/50, D21H 23/56, B05C 1/16, B05C 1/08, B05C 5/02

(54) **Vorrichtung und Verfahren zum Auftragen eines flüssigen oder pastösen Auftragsmediums auf eine laufende Materialbahn, insbesondere aus Papier oder Karton**
Apparatus and process for applying a liquid or pasty medium onto a moving web, in particular of paper or board
Dispositif et procédé pour d'enduction d'une substance liquide ou pâteuse sur une bande en mouvement, particulièrement en papier ou en carton

(30) Priorität: 19.02.1998 DE 19807000
(43) Veröffentlichungstag der Anmeldung: 25.08.1999
(73) Patentinhaber: Voith Paper Patent GmbH, 89522 Heidenheim (DE)
(72) Erfinder: Bernert, Richard, 89537 Giengen (DE)

(56) Entgegenhaltungen:
- EP-A- 0 617 167
- EP-A- 0 826 825
- DE-A- 19 500 402
- DE-U- 29 613 687
- US-A- 4 860 686
- US-A- 5 454 870

## Beschreibung

Die Erfindung betrifft eine Vorrichtung zum Auftragen eines flüssigen oder pastösen Auftragsmediums auf einen Auftragsbereich eines laufenden Untergrunds, wobei der Untergrund bei direktem Auftragen die Oberfläche einer Materialbahn, insbesondere aus Papier oder Karton, ist oder bei indirektem Auftragen die Oberfläche eines Übertragselements, beispielsweise einer Übertragswalze oder eines Endlosbandes, ist, welches das Auftragsmedium an die Materialbahn überträgt, wobei ein Auftragswerk mit wenigstens einer Öffnung zum Abgeben des Auftragsmediums an den Untergrund vorgesehen ist, und wobei die wenigstens eine Öffnung von dem Untergrund einen vorbestimmten Abstand aufweist.

Die DE 296 13 687 U1 offenbart eine gattungsgemäße Vorrichtung, bei der ein Freistrahl-Düsenauftragswerk zum Einsatz kommt. Zur Festlegung der Seitenränder des Auftragsbereichs sind in dem Auftragsspalts des Freistrahl-Düsenauftragswerks speziell ausgebildete Elemente angeordnet, die ein Auftreffen des abgegebenen Auftragsmediums auf den Randbereichen der Materialbahn und der Stützwalze, um die diese herumgeführt ist, verhindern. Diese Art der Definition der Seitenränder des Auftragsbereichs ist konstruktiv aufwendig und teuer, da die gesonderten Elemente der Form des Abgabeendes des jeweiligen Auftragswerks und der Weite des Auftragsspaltes angepaßt ausgebildet sein müssen.

Demgegenüber ist es Aufgabe der Erfindung, eine Vorrichtung der gattungsgemäßen Art anzugeben, bei der die Definition der Seitenränder des Auftragsbereichs in einfacher und kostengünstiger Weise gewährleistet werden kann.

Diese Aufgabe wird bei einer gattungsgemäßen Vorrichtung erfindungsgemäß dadurch gelöst, daß an wenigstens einem der beiden Seitenränder des Auftragsbereichs ein Blendenelement zwischen der Abgabeöffnung und dem Untergrund angeordnet ist, welches ein Auftragen von Auftragsmedium außerhalb des Auftragsbereichs verhindert und so den jeweiligen Seitenrand des Auftragsbereichs festlegt.

Da das erfindungsgemäße Blendenelement nicht mehr im Abgabeende bzw. im Auftragsspalt des Auftragswerks angeordnet ist, unterliegt es auch nicht den von diesem vorgegebenen Randbedingungen. Trotz der durch die Anordnung zwischen Abgabeöffnung und Untergrund vorgegebenen konstruktiven Beschränkungen kann es dadurch "großzügiger" konstruiert werden und somit einfacher aufgebaut sein. Dies wirkt sich sowohl hinsichtlich der Materialwahl als auch hinsichtlich der Konstruktion als solcher günstig auf die Herstellungskosten aus. Darüber hinaus kann ein und derselbe Typ von Blendenelement bei einer Vielzahl verschiedener Auftragswerke eingesetzt werden, was sich wiederum in niedrigeren Herstellungskosten niederschlägt.

Der Einsatz eines Blendenelements ist an sich aus der prioritätsälteren deutschen Patentanmeldung 197 03 211 1 bekannt. Im Unterschied zum Blendenelement der vorliegenden Erfindung erstreckt sich dieses jedoch über die gesamte Breite des Auftragsbereichs und wird lediglich dann in den von dem Auftragswerk abgegebenen Strahl von Auftragsmedium eingeführt, wenn der Durchgang einer Spleißstelle, d.h. einer Klebestelle aufeinanderfolgender Materialbahnen, bevorsteht, um diese vor Aufweichen durch das Auftragsmedium zu schützen. Das bekannte Blendenelement ist also nicht während des gesamten Auftragsbetriebs in den vom Auftragswerk abgegebenen Auftragsmedium-Strahl eingeblendet.

Um beim Abfangen des Auftragsmedium-Strahls durch das Blendenelement der Bildung von Auftragsmedium-Spritzern vorbeugen zu können, welche die Sauberkeit und Qualität des jeweiligen Seitenrand des Auftragsbereichs beeinträchtigen oder die Umgebung verschmutzen würden, wird in Weiterbildung der Erfindung vorgeschlagen, daß das wenigstens eine Blendenelement derart angeordnet ist, daß das Auftragsmedium unter einem spitzen Winkel auf die dem Untergrund abgewandte Oberfläche des Blendenelements auftrifft.

Um einer Verschmutzung der Umgebung weiter vorbeugen zu können, wird außerdem vorgeschlagen, daß an einer Kante des Blendenelements, welche der den Seitenrand des Auftragsbereichs definierenden Kante entgegengesetzt ist, eine Stirnwand angebracht ist.

Das von dem Blendenelement abgefangene Auftragsmedium kann dadurch, daß die dem Untergrund abgewandte Oberfläche des Blendenelements einem Oberflächenausschnitt aus einem Kreiszylinder entsprechend geformt ist, in einfacher Weise vom laufenden Untergrund weggeführt werden. Das weggeführte Auftragsmedium kann beispielsweise in einer Auffangvorrichtung, die gewünschtenfalls die Form einer Auffangrinne haben kann, aufgefangen und der Wiederverwendung zugeführt werden.

Wenn das Blendenelement mit bis zu 50% der in Laufrichtung des Untergrunds gemessenen Länge des Blendenelements in Laufrichtung des Untergrunds vor der wenigstens einen Abgabeöffnung des Auftragswerks angeordnet ist, so kann auch Auftragsmedium, welches an dem Blendenelement entgegen der Laufrichtung des Untergrunds abströmt, vom Untergrund weggeführt und beispielsweise in der Auffangvorrichtung aufgefangen werden.

Zur Reduzierung der Herstellungskosten kann das Blendenelement als Blechkonstruktion ausgeführt sein.

Zur Ermöglichung einer Variation des Seitenrands wird in Weiterbildung der Erfindung vorgeschlagen, daß eine Stellvorrichtung zur Einstellung des wenigstens einen Blendenelements vorgesehen ist. Das Blendenelement kann dabei beispielsweise an einer Führungsschiene geführt und an dieser mittels einer Klemmvorrichtung festlegbar sein. Die Verstellung kann sowohl von Hand als auch mittels einer motorischen Antriebsvorrichtung erfolgen.

Das erfindungsgemäße Blendenelement kann beispielsweise in Verbindung mit einem Freistrahl-Düsenauftragswerk eingesetzt werden. Es ist jedoch ebenso möglich, es in Verbindung mit einem Sprühauftragswerk einzusetzen. Ebenso kann die Erfindung sowohl dann eingesetzt werden, wenn die Abgabeöffnung von einem einzigen, über die gesamte Auftragsbreite durchgehenden Auftragsspalt gebildet ist, als auch dann, wenn eine Mehrzahl von Abgabeöffnungen in Form von Sprühdüsen vorgesehen ist. Grundbedingung für den Einsatz des erfindungsgemäßen Blendenelements ist lediglich, daß zwischen dem laufenden Untergrund und der Abgabeöffnung des Auftragswerks ein nicht verschwindender Abstand besteht.

Die Erfindung betrifft nach einem weiteren Gesichtspunkt ein Verfahren zum Auftragen eines flüssigen oder pastösen Auftragsmediums auf einen Auftragsbereich eines laufenden Untergrunds unter Verwendung einer Vorrichtung, wie sie vorstehend in ihren verschiedenen Ausführungsmöglichkeiten diskutiert worden ist. Bei dem erfindungsgemäßen Verfahren wird mittels des wenigstens einen Blendenelements während wenigstens eines Teils der Auftragszeit ein Auftragen wenigstens eines Teils des von dem Auftragswerk abgegebenen Auftragsmediums auf den Untergrund verhindert und so der jeweilige Seitenrand des Auftragsbereichs festgelegt. Hinsichtlich der Vorteile und der weiteren Variationsmöglichkeiten des erfindungsgemäßen Verfahrens sei auf die vorstehende Diskussion der erfindungsgemäßen Vorrichtung verwiesen.

Die Erfindung wird im folgenden an einem Ausführungsbeispiel anhand der beiliegenden Zeichnung näher erläutert werden. Es stellt dar:
- Fig. 1: einen schematischen Seitenschnitt der erfindungsgemäßen Auftragsvorrichtung und
- Fig. 2: einen Schnitt längs der Linie II-II in Fig. 1.

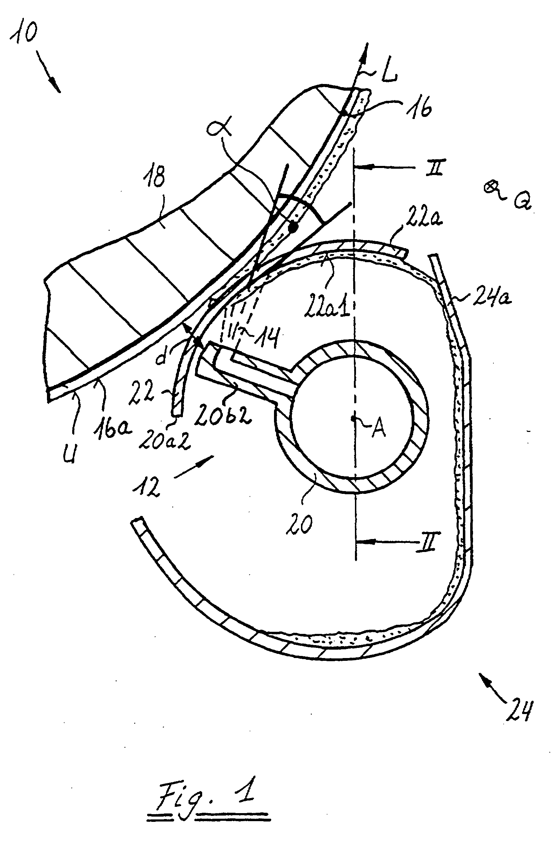

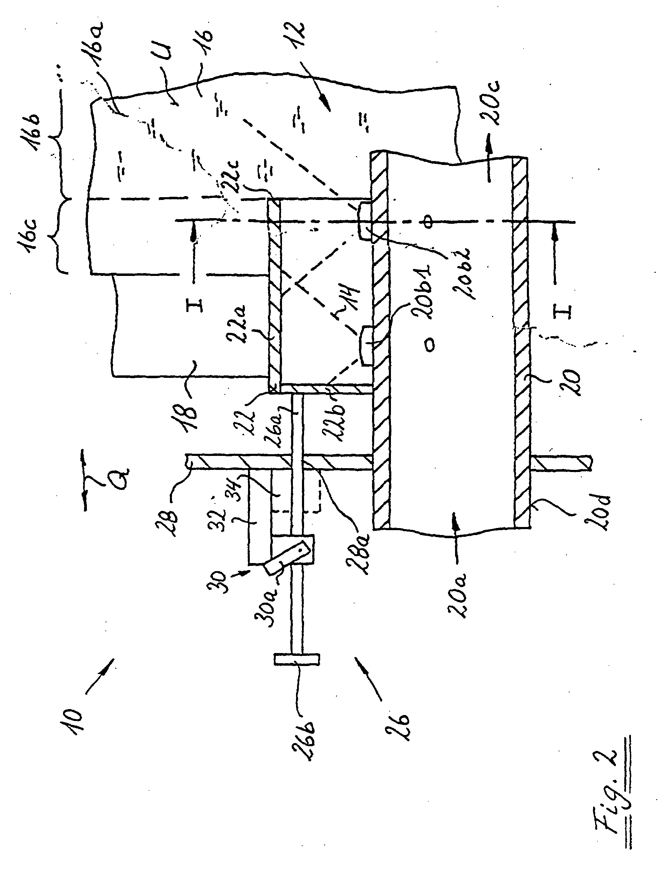

In den Fig. 1 und 2 ist eine erfindungsgemäße Auftragsvorrichtung allgemein mit 10 bezeichnet. Sie umfaßt ein Auftragswerk 12 zum Auftragen eines flüssigen oder pastösen Mediums 14 auf einen sich in Richtung des Pfeils L vorüberbewegenden Untergrund U. Der Untergrund U ist im dargestellten Ausführungsbeispiel die Oberfläche 16a einer Materialbahn 16, die beispielsweise aus Papier oder Karton gebildet ist. Die Materialbahn 16 ist im Bereich des Auftragswerks 12 um eine Stützwalze 18 herumgeführt, die derart drehangetrieben ist, daß sie mit der Materialbahn 16 in im wesentlichen rutsch- und schlupffreiem Eingriff steht. Eine in Laufrichtung L der Materialbahn 16 dem Auftragswerk 12 nachgeordnete Vorrichtung zum Egalisieren oder/und Dosieren des auf die Materialbahn aufgebrachten Auftragsmediums 14 ist in den Figuren der Übersichtlichkeit der Darstellung halber nicht gezeigt.

Die Auftragsvorrichtung 12 umfaßt ein Verteilrohr 20, dem über eine in Fig. 2 nicht detailliert dargestellte Eintrittsöffnung 20a Auftragsmedium 14 zugeführt wird, und das eine Mehrzahl von in Querrichtung Q der Materialbahn 16 nebeneinander angeordnete Sprühelemente 20b1, 20b2, ... zur Abgabe des Auftragsmediums 14 an die Materialbahn 16 umfaßt. Überschüssiges Auftragsmedium 14, das dem Verteilrohr 20 durch die Eintrittsöffnung 20a zugeführt worden ist, dieses aber durch die Sprühdüsen 20b1, 20b2, ... nicht wieder verläßt, kann über eine in Fig. 1 ebenfalls nicht detailliert dargestellte Austrittsöffnung 20c das Verteilrohr 20 wieder verlassen und der Wiederverwendung zugeführt werden. Die Querschnittsfläche des Verteilrohrs 20 kann in Querrichtung Q von der Eintrittsöffnung 20a zur Austrittsöffnung 20c derart variieren, daß das Auftragsmedium 14 an den Düsenelementen 20b1, 20b2, ... mit im wesentlichen dem gleichen hydrodynamischen Druck ansteht. Hierdurch kann eine gleichmäßige Abgabe des Auftragsmediums 14 an die Materialbahnoberfläche 16a sichergestellt werden.

Wie in Fig. 2 dargestellt ist, weist die Materialbahn 16 in Querrichtung Q eine geringere Breite auf als die Stützwalze 18. Darüber hinaus wird das Auftragsmedium 14 nicht auf die gesamte Breite der Materialbahn 16 aufgetragen, sondern man beläßt beidseits eines Auftragsbereichs 16b der Materialban 16 einen unbeschichteten Seitenrand 16c. Zur Festlegung der Seitenränder 16c verfügt die erfindungsgemäße Auftragsvorrichtung 10 über jeweils ein Blendenelement 22, das zumindest teilweise zwischen der Materialbahn 16 und dem Auftragswerk 12 angeordnet ist und sich in Querrichtung der Materialbahn über eine vorbestimmte Länge erstreckt. Das Blendenelement 22 verhindert bezüglich eines Teils der Sprühdüsen 20b1, 20b2, ... ein Beschichten des Untergrunds U mit dem von diesen Sprühdüsen abgegebenen Auftragsmedium 14 vollständig oder zumindest teilweise.

In der dargestellten Ausführungsform umfaßt das Blendenelement 22 einen ersten, entsprechend einem Teil einer Kreiszylinderoberfläche geformten Blechkörper 22a, der annähernd koaxial zu einer Achse A des Verteilrohrs 20 verläuft und eine mit dem Kreiszylinderabschnitt 22a fest verbundene, vorzugsweise ebenfalls aus Blech geformte Stirnwand 22b aufweist, die auf einer äußeren Oberfläche 20d des Verteilrohrs 20 gleitverschieblich geführt. Die Stirnwand 22b verhindert, daß Auftragsmedium 14 seitlich aus dem Auftragswerk 12 herausspritzt. In der Darstellung gemäß Fig. 2 wird das von der Sprühdüse 20b1 abgegebene Auftragsmedium 14 von dem Blendenelement 22 vollständig abgefangen, während der Sprühstrahl der Sprühdüse 20b2 lediglich teilweise daran gehindert wird, auf die Oberfläche 16a der Materialbahn 16 zu gelangen. Die in Fig. 2 rechte Kante 22c des Blendenelements 22 legt somit den Grenzverlauf zwischen dem Auftragsbereich 16b und dem Seitenrand 16c fest.

Gemäß Fig. 1 ist der Kreiszylinderabschnitt 22a des Blendenelements 22 derart zwischen den Sprühdüsen 20b1, 20b2, ... und der Materialbahn 16 angeordnet, daß das von dem Blendenelement 22 abgefangene Auftragsmedium 14 unter einem spitzen Winkel α auf die innere Oberfläche 22a1 des Kreiszylinderabschnitts 22a auftrifft. Hierdurch wird der Bildung von Spritzern des Auftragsmediums 14 vorgebeugt, was zur Erzielung einer scharf begrenzten Trennlinie zwischen dem Auftragsbereich 16b und dem Seitenrand 16c sowie zur Sauberkeit des Seitenrands 16c beiträgt. Das aufgefangene Auftragsmedium 14 fließt aufgrund der ihm von der Sprühdüse 20b2 verliehenen kinetischen Energie längs der inneren Oberfläche 22a1 des Kreiszylinderabschnitts 22a an dieser entlang und wird schließlich von einer Fangwand 24a einer Auffangrinne 24 aufgefangen. im unteren Bereich der Auffangrinne 24 sammelt sich das Auftragsmedium 14 an und kann über einen nicht dargestellten Abfluß der Wiederverwendung zugeführt werden.

Wie in Fig. 1 dargestellt ist, erstreckt sich der Kreiszylinderabschnitt 22a ausgehend von dem Sprühelement 20b2 nicht nur in Uhrzeigerrichtung, sondern auch über einen gewissen Bereich, der bis zu 50% der Gesamterstreckung des Blendenelements 22 um die Achse A betragen kann, entgegen der Uhrzeigerrichtung bis zu einem Punkt 20a2. Hierdurch soll sichergestellt werden, daß etwaig entgegen dem Uhrzeigersinn abfließendes Auftragsmedium 14, der sogenannte "backflow", zuverlässig von der Oberfläche 16a der Materialbahn 16 abgehalten und ebenfalls in die Auffangrinne 24 geleitet wird. Dies hat selbstverständlich wiederum den Zweck, Schärfe und Sauberkeit des Seitenrands 16c sicherzustellen.

Gemäß Fig. 2 ist das Blendenelement 22 mit der Stellstange 26a eines Verstellmechanismus 26 verbunden, der eine Einstellung der genauen Position der Grenzlinie zwischen dem Auftragsbereich 16b und dem Seitenrand 16 ermöglicht. Der Verstellmechanismus 26 ist in der Ausführungsform gemäß Fig. 2 zur manuellen Verstellung des Blendenelements 22 ausgebildet. Die Stellstange 26a ist durch eine Öffnung 28a eines maschinenrahmenfesten Teils 28 sowie durch eine Klemmeinrichtung 30 geführt. Die Klemmeinrichtung 30 ist über ein Stegblech 32 ebenfalls an dem rahmenfesten Teil 28 befestigt. Ein nicht dargestelltes Klemmelement kann durch Betätigen eines Klemmhebels 30a außer Eingriff mit der Stellstange 26a gebracht werden, um deren Verschieben in Querrichtung Q und somit ein Verstellen des Blendenelements 22 in Querrichtung Q zu ermöglichen, bzw. in Eingriff mit der Stellstange 26a gebracht werden, um das Blendenelement 22 in Querrichtung Q in einer gewünschten Stellung zu fixieren. Zum Verschieben der Stellstange 26a kann eine Bedienungsperson an einem Handgriff 26b der Stelleinrichtung 26 angreifen. Selbstverständlich ist auch ein automatisches Verstellen des Blendenelements 22 möglich. Ein entsprechener Stellmotor 34, der auf die Stellstange 26a einwirkt, ist in Fig. 2 gestrichelt angedeutet.

Es versteht sich, daß die Darstellung gemäß Fig. 2 das Blendenelement 22, die Stelleinrichtung 26 und das Auftragswerk 12 lediglich grobschematisch zeigt, vor allem was die jeweiligen Abmessungen dieser Elemente und Vorrichtungen in Querrichtung Q anbelangt. Selbstverständlich kann auch dem in Fig. 2 nicht dargestellten Seitenrand der Materialbahn 16 eine entsprechende Ausführungsform des Blendenelements 22 zugeordnet sein.

Festzuhalten ist, daß anstelle des in den Fig. 1 und 2 dargestellten Sprühdüsenauftragswerks 12, das eine Mehrzahl von Sprühdüsen 20b1, 20b2, ... umfaßt, auch ein Freistrahl-Düsenauftragswerk mit einem einzigen, in Querrichtung Q durchgehenden Auftragsspalt vorgesehen sein kann. Ganz allgemein kann das erfindungsgemäße Blendenelement 22 bei jedem Auftragswerk mit Vorteil eingsetzt werden, bei dem zwischen dem Auftragswerk und dem laufenden Untergrund ein vorbestimmter, nicht verschwindender Abstand d vorgesehen ist, der zur Zwischenanordnung eines Auffangelements ausreicht.

## Patentansprüche

1. Vorrichtung (10) zum Auftragen eines flüssigen oder pastösen Auftragsmediums (14) auf einen Auftragsbereich (16b) eines laufenden Untergrunds (U),
wobei der Untergrund (U) bei direktem Auftragen die Oberfläche (16a) einer Materialbahn (16), insbesondere aus Papier oder Karton, ist oder bei indirektem Auftragen die Oberfläche eines Übertragselements, beispielsweise einer Übertragswalze, ist, welches das Auftragsmedium an die Materialbahn überträgt,
wobei ein Auftragswerk (12) mit wenigstens einer Öffnung (20b1, 20b2, ...) zum Abgeben des Auftragsmediums (14) an den Untergrund (U) vorgesehen ist und
wobei die wenigstens eine Öffnung (20b1, 20b2, ...) von dem Untergrund (U) einen vorbestimmten Abstand (d) aufweist,
**dadurch gekennzeichnet, daß** an wenigstens einem der beiden Seitenränder (16c) des Auftragsbereichs (16b) ein Blendenelement (22) zwischen der Abgabeöffnung (20b1, 20b2, ...) und dem Untergrund (U) angeordnet ist, welches ein Auftragen von Auftragsmedium (14) außerhalb des Auftragsbereichs (16b) verhindert und so den jeweiligen Seitenrand (16c) des Auftragsbereichs (16b) festlegt.

2. Vorrichtung nach Anspruch 1,
**dadurch gekennzeichnet, daß** das wenigstens eine Blendenelement (22) derart angeordnet ist, daß das Auftragsmedium (14) unter einem spitzen Winkel (α) auf die dem Untergrund (U) abgewandte Oberfläche (22a1) des Blendenelements (22) auftrifft.

3. Vorrichtung nach Anspruch 1 oder 2,
**dadurch gekennzeichnet, daß** an einer Kante des Blendenelements (22), welche der den Seitenrand (16c) des Auftragsbereichs (16b) definierenden Kante (22c) entgegengesetzt ist, eine Stirnwand (22b) angebracht ist.

4. Vorrichtung nach einem der Ansprüche 1 bis 3,
**dadurch gekennzeichnet, daß** die dem Untergrund (U) abgewandte Oberfläche (22a1) des Blendenelements (22) einem Oberflächenausschnitt (22a) aus einem Kreiszylinder entsprechend geformt ist.

5. Vorrichtung nach einem der Ansprüche 1 bis 4,
**dadurch gekennzeichnet, daß** eine Auffangvorrichtung (24), beispielsweise in Form einer Auffangrinne, vorgesehen ist zum Auffangen des von dem wenigstens einen Blendenelement (22) zurückgehaltenen Auftragsmediums (14).

6. Vorrichtung nach einem der Ansprüche 1 bis 5,
**dadurch gekennzeichnet, daß** bis zu 50% der in Laufrichtung (L) des Untergrunds (U) gemessenen Länge des Blendenelements (22) in Laufrichtung des Untergrunds (U) vor der wenigstens einen Abgabeöffnung (22b1, 22b2, ...) des Auftragswerks (12) angeordnet ist.

7. Vorrichtung nach einem der Ansprüche 1 bis 6,
**dadurch gekennzeichnet, daß** das Blendenelement (22) als Blechkonstruktion ausgeführt ist.

8. Vorrichtung nach einem der Ansprüche 1 bis 7,
**dadurch gekennzeichnet, daß** eine Stellvorrichtung (26) zur Einstellung des wenigstens einen Blendenelements (22) vorgesehen ist.

9. Vorrichtung nach Anspruch 8,
**dadurch gekennzeichnet, daß** die Stellvorrichtung (26) eine Führungsschiene (26a) für das wenigstens eine Blendenelement (22) und gewünschtenfalls eine Klemmeinrichtung (30) zum Festlegen des Blendenelements (22) aufweist.

10. Vorrichtung nach Anspruch 8 oder 9,
**dadurch gekennzeichnet, daß** der Stellvorrichtung (26) eine motorische Antriebsvorrichtung (34) zugeordnet ist.

11. Vorrichtung nach einem der Ansprüche 1 bis 10,
**dadurch gekennzeichnet, daß** das Auftragswerk ein Freistrahl-Düsenauftragswerk ist.

12. Vorrichtung nach einem der Ansprüche 1 bis 10,
**dadurch gekennzeichnet, daß** das Auftragswerk ein Sprühauftragswerk (12) ist.

13. Vorrichtung nach einem der Ansprüche 1 bis 12,
**dadurch gekennzeichnet, daß** die Abgabeöffnung von einem einzigen über die gesamte Auftragsbreite durchgehenden Auftragsspalt gebildet ist.

14. Vorrichtung nach einem der Ansprüche 1 bis 12,
**dadurch gekennzeichnet, daß** eine Mehrzahl von Abgabeöffnungen in Form von Sprühdüsen (22b1, 22b2, ...) vorgesehen ist.

15. Verfahren zum Auftragen eines flüssigen oder pastösen Auftragsmediums (14) auf einen Auftragsbereich (16b) eines laufenden Untergrunds (U) unter Verwendung einer Vorrichtung nach einem der vorhergehenden Ansprüche,
**dadurch gekennzeichnet, daß** man mittels des wenigstens einen Blendenelements (22) während wenigstens eines Teils der Auftragszeit ein Auftragen wenigstens eines Teils des von dem Auftragswerk (12) abgegebenen Auftragsmediums (14) auf den Untergrund (U) verhindert und so den jeweiligen Seitenrand (16c) des Auftragsbereichs (16b) festlegt.

## Claims

1. Apparatus (10) for applying a liquid or pasty application medium (14) to an application area (16b) of a moving base (U),
the base (U) in the case of direct application being the surface (16a) of a web (16), especially a paper or board web, and in the case of indirect application being the surface of a transfer element, for example a transfer roll, which transfers the application medium to the web,
an applicator unit (12) with at least one opening (20b1, 20b2, ...) for outputting the application medium (14) to the base (U) being provided and
the at least one opening (20b1, 20b2, ...) being at a predetermined distance (d) from the base (U),
**characterized in that**, that at least one of the two side edges (16c) of the application area (16b), a shutter element (22) is arranged between the output opening (20b1, 20b2, ...) and the base (U), which prevents any application of application medium (14) outside the application area (16b) and therefore defines the respective side edge (16c) of the application area (16b).

2. Apparatus according to Claim 1, **characterized in that** the at least one shutter element (22) is arranged in such a way that the application medium (14) is incident on the surface (22a1) of the shutter element (22) that faces away from the base (U) at an acute angle (α).

3. Apparatus according to Claim 1 or 2, **characterized in that** at one edge of the shutter element (22), which is opposite the edge (22c) that defines the side edge (16c) of the application area (16b), an end wall (22b) is fitted.

4. Apparatus according to one of Claims 1 to 3, **characterized in that** the surface (22a1) of the shutter element (22) that faces away from the base (U) is shaped so as to correspond to a section (22a) of a surface of a circular cylinder.

5. Apparatus according to one of Claims 1 to 4, **characterized in that** a collecting apparatus (24), for example in the form of a collecting trough, is provided in order to collect the application medium (14) held back by the at least one shutter element (22).

6. Apparatus according to one of Claims 1 to 5, **characterized in that** up to 50% of the length of the shutter element (22), measured in the running direction (L) of the base (U), is arranged upstream, in the running direction of the base (U), of the at least one output opening (22b1, 22b2, ...) of the applicator unit (12).

7. Apparatus according to one of Claims 1 to 6, **characterized in that** the shutter element (22) is implemented as a sheet-metal construction.

8. Apparatus according to one of Claims 1 to 7, **characterized in that** an actuating device (26) for adjusting the at least one shutter element (22) is provided.

9. Apparatus according to Claim 8, **characterized in that** the actuating device (26) has a guide rail (26a) for the at least one shutter element (22) and, if desired, a clamping device (30) for fixing the shutter element (22).

10. Apparatus according to Claim 8 or 9, **characterized in that** the actuating device (26) is assigned a motorized drive device (34).

11. Apparatus according to one of Claims 1 to 10, **characterized in that** the applicator unit is a free-jet nozzle applicator unit.

12. Apparatus according to one of Claims 1 to 10, **characterized in that** the applicator unit is a spray applicator unit (12).

13. Apparatus according to one of Claims 1 to 12, **characterized in that** the output opening is formed by a single applicator gap which is continuous over the entire application width.

14. Apparatus according to one of Claims 1 to 12, **characterized in that** a plurality of output openings in the form of spray nozzles (22b1, 22b2, ...) is provided.

15. Method of applying a liquid or pasty application medium (14) to an application area (16b) of a moving base (U), using an apparatus according to one of the preceding claims,
**characterized in that**, by means of the at least one shutter element (22), during at least part of the application time, the application of at least some of the application medium (14) output by the applicator unit (12) onto the base (U) is prevented and, in this way, the respective side edge (16c) of the application area (16b) is defined.

## Revendications

1. Dispositif (10) pour l'application d'un milieu d'application liquide ou pâteux (14) sur une zone d'application (16b) d'un substrat en mouvement (U),
dans lequel le substrat (U) lors de l'application directe, est la surface (16a) d'une bande de matériau (16), en particulier en papier ou en carton, ou, lors de l'application indirecte, est la surface d'un élément de transfert, par exemple un cylindre de transfert, qui transfère le milieu d'application sur la bande de matériau,
dans lequel un dispositif de couchage (12) comprenant au moins une ouverture (20b1, 20b2,...) est prévu pour déposer le milieu d'application (14) sur le substrat (U) et
dans lequel l'au moins une ouverture (20b1, 20b2, ...) présente un espacement (d) prédéfini par rapport au substrat (U),
**caractérisé en ce qu**'au moins sur l'un des deux bords latéraux (16c) de la zone d'application (16b), un élément de panneau (22) est prévu entre l'ouverture de dépôt (20b1, 20b2, ...) et le substrat (U), lequel élément empêche une application du milieu d'application (14) en dehors de la zone d'application (16b) et définit ainsi le bord latéral respectif (16c) de la zone d'application (16b).

2. Dispositif selon la revendication 1, **caractérisé en ce que** l'au moins un élément de panneau (22) est disposé de telle sorte que le milieu d'application (14) vienne en contact avec la surface (22a1) de l'élément de panneau (22) opposée au substrat (U) suivant un angle aigu (α).

3. Dispositif selon la revendication 1 ou 2, **caractérisé en ce qu'**une paroi frontale (22b) est montée sur une arête de l'élément de panneau (22) qui est opposée à l'arête (22c) définissant le bord latéral (16c) de la zone d'application (16b).

4. Dispositif selon l'une quelconque des revendications 1 à 3, **caractérisé en ce que** la surface (22a1) de l'élément de panneau (22) opposée au substrat (U) est formée suivant une portion de surface (22a) d'un cylindre circulaire.

5. Dispositif selon l'une quelconque des revendications 1 à 4, **caractérisé en ce qu'**un dispositif de collecte (24), par exemple sous la forme d'une rigole de collecte, est prévu pour collecter le milieu d'application (14) retenu par l'au moins un élément de panneau (22).

6. Dispositif selon l'une quelconque des revendications 1 à 5, **caractérisé en ce que** jusqu'à 50% de la longueur de l'élément de panneau (22) mesurée dans la direction d'avance (L) du substrat (U) sont disposés dans la direction d'avance du substrat (U) avant l'au moins une ouverture de dépôt (22b1, 22b2, ...) du dispositif de couchage (12).

7. Dispositif selon l'une quelconque des revendications 1 à 6, **caractérisé en ce que** l'élément de panneau (22) est réalisé en tant que construction en tôle.

8. Dispositif selon l'une quelconque des revendications 1 à 7, **caractérisé en ce qu'**il est prévu un dispositif de réglage (26) pour l'ajustement de l'au moins un élément de panneau (22).

9. Dispositif selon la revendication 8, **caractérisé en ce que** le dispositif de réglage (26) présente un rail de guidage (26a) pour l'au moins un élément de panneau (22) et si on le souhaite, un dispositif de serrage (30) pour fixer l'élément de panneau (22).

10. Dispositif selon la revendication 8 ou 9, **caractérisé en ce qu'**un dispositif d'entraînement par moteur (34) est associé au dispositif de réglage (26).

11. Dispositif selon l'une quelconque des revendications 1 à 10, **caractérisé en ce que** le dispositif de couchage est un dispositif d'application à la buse à jet libre.

12. Dispositif selon l'une quelconque des revendications 1 à 10, **caractérisé en ce que** le dispositif de couchage est un dispositif de couchage par pulvérisation (12).

13. Dispositif selon l'une quelconque des revendications 1 à 12, **caractérisé en ce que** l'ouverture de dépôt est formée par une fente d'application unique traversant toute la largeur d'application.

14. Dispositif selon l'une quelconque des revendications 1 à 12, **caractérisé en ce qu'**il est prévu une pluralité d'ouvertures de dépôt en forme de buses de pulvérisation (22b1, 22b2, ...).

15. Procédé d'application d'un milieu d'application liquide ou pâteux (14) sur une zone d'application (16b) d'un substrat en mouvement (U), utilisant un dispositif selon l'une quelconque des revendications précédentes,
**caractérisé en ce que** l'on empêche une application d'au moins une partie du milieu d'application (14) déposé par le dispositif de couchage (12) sur le substrat (U) au moyen de l'au moins un élément de panneau (22) pendant au moins une partie du temps d'application, et que l'on définit ainsi le bord latéral respectif (16c) de la zone d'application (16b).
